Europäisches Patentamt

European Patent Office

Office européen des brevets

(19)

(11) Publication number: **0 045 723**

A1

(12) # EUROPEAN PATENT APPLICATION

(21) Application number: **81830112.9**

(22) Date of filing: **08.07.81**

(51) Int. Cl.³: **B 60 M 1/24**

(30) Priority: **31.07.80 IT 2383380**

(43) Date of publication of application:
**10.02.82 Bulletin 82/6**

(84) Designated Contracting States:
**AT BE CH DE FR GB LI LU NL SE**

(71) Applicant: **Pastro, Vittorio**
**21, Via Calamatta**
**I-20137 Milano(IT)**

(72) Inventor: **Pastro, Vittorio**
**21, Via Calamatta**
**I-20137 Milano(IT)**

(74) Representative: **Gervasi, Gemma et al,**
**Studio Brevetti e Marchi NOTARBARTOLO & GERVASI**
**33, Viale Bianca Maria**
**I-20122 Milano(IT)**

(54) Jaw for supporting overhead lines of trolley-buses.

(57) This invention relates to a new type of jaw for supporting aerial contact lines 11 of trolley-buses and the like, comprising two oblong plates 6,7 fastened to each other, which are shaped in the lower part in order to clamp the contact wire (11) and equipped on the upper side with a hub 9 for the connection to a suspension.

FIG. 7

EP 0 045 723 A1

- 1 -

Jaw for supporting overhead lines of trolley-buses.

The present invention relates to a new type of jaw for supporting aerial contact lines of trolley-buses, tramways, underground railways and so on, comprising two oblong plates fastened each other, which are equipped on the upper side with a connection to a suspension, cable and so on, and in the lower part with a structural shape for clamping the contact wire.

As it is known, the critical point of the aerial contact lines lies in coincidence with the suspension, where the wire is fixed in order to support it. Indeed here cracks of the wire form owing to the stopping of the vibrations of the jaw, as well as loosening, for the wear is caused by the sliding friction of the collector shoes on the wire, both for the wire's clamping in the jaw after a span of free wire and for the direction change of the motion of the current collectors due to the cusp formed by the conductors at the intersection of the two catenary suspension lines, the preceding one and the following one.

Along the curves the above mentioned effects are lessened in consequence of the horizontal traction due to the traversing of the contact wires, which are lengthwise stretched, and to the reduced length of the spans adjusted to the bending radius.

However in the case of current collectors having lateral guide (trolley-buses), the traversing angle caused by the conductors is determinant for the lateral wear of the conductors themselves and the reliable slide of the current collectors.

It is known that the damages due to the above mentioned causes can be kept within acceptable limits by means of the reduction of the traversing angles through the increase of the holding points, or, otherwise, by means of suitable radiusing electrical junction boxes; neverthless these methods will increase weight and encumbrance. Moreover, on the one hand both methods can make the general problem less difficult, on the other hand they increase the above mentioned problems for the straight lines.

The present invention offers an excellent solution, suggesting the use of jaws for straight and bent lines with limited weight and encumbrance. This aspect is clearly proved by the following figures: a jaw according to this invention is 60 cm. long and weighs 1 kg, while an equivalent jaw according to the previous technique is 160 cm long and weighs 6-7 kg.

The jaw according to this invention is made in preference of stainless steel.

According to the experience, the new jaw for straight lines allows the following advantages through a suitable lengthening of the section covered by the jaw itself: a gradual damping of the vibrations is achieved and, moreover, an adjustable positioning of the stiffness point and the radiusing of the cusp are permitted.

The stiffness of the jaw can be modified also by means of suitable notchings on the plates of the jaw itself. Moreover the new jaw for bent lines allows the radiusing of the traversing angles without weight increment and with reduced encumbrance.

The new jaw, both for straight and bent lines comprises two plates lengthwise arranged side by side and fastened each other, whose lower ends are pliers-shaped for the anchorage of the conductor having standard shaped cross section and whose top ends are equipped with a connection to the suspension.

The new jaw for straight lines is equipped with a connection or hub (for the suspension), which is central in regard to the length and to the axis of the jaw itself; the connection can be formed by a nut or a threaded pin.

On the contrary the new jaw for bent lines shows a connection hub which is central in regard to its length, but off-center in regard to the jaw itself.

The plates forming the jaw can show one bead, two beads or no bead, according to the type of jaw: for $\leqslant 10°$ bent lines, $\leqslant 15°$ bent lines or straight lines respectively; the beads are obtained by a 90° external bending of the plates top edge.

Moreover the combination of several plates allows the adaptation of the jaw to the lateral stresses and, consequently, to the traversing angles.

The jaw according to this invention can be connected lengthwise by means of suitable plaques (links), in order to obtain the expected length, or, otherwise, in parallel for the support and the guide of two or more wires, forming a compact assembly for systems subject to high current drawing and installed within a limited room, e.g. for underground railways.

The following figures will illustrate further the present invention without, however, limiting the same thereto:

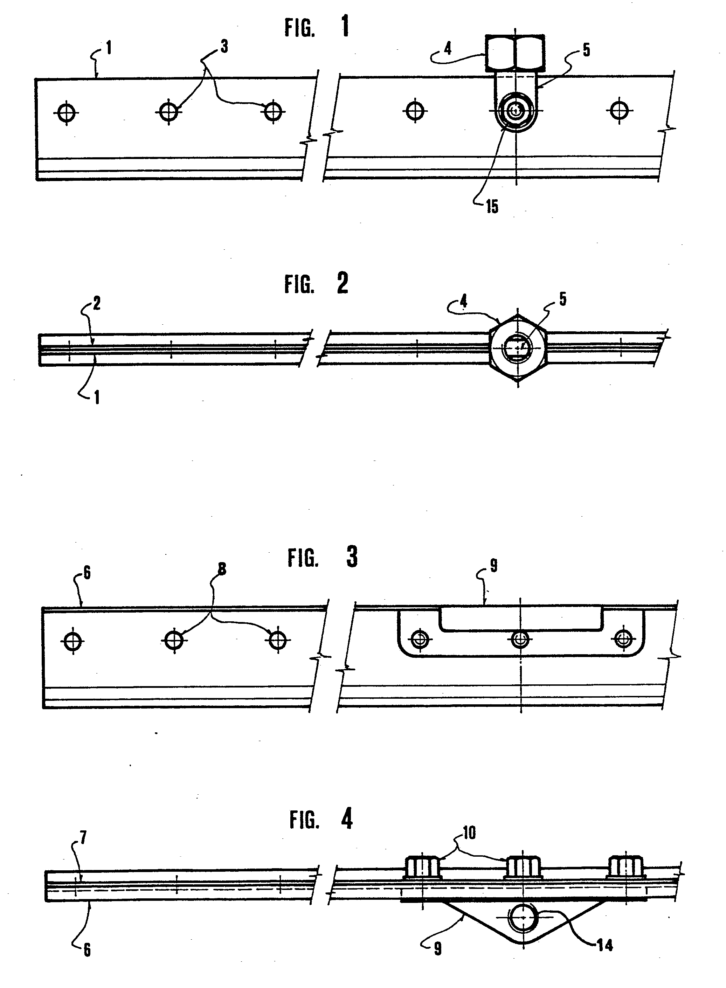

Fig. 1 and 2 : show part of a jaw for straight lines, object of the invention including the hub for the central suspension, in side view and in plan view respectively.

Fig. 3 and 4 : represent a jaw for bent lines, object of the invention, having an angle less than 10° or equal to 10°, including the hub for the central and lateral suspension, in side view and plan view respectively.

Fig. 5 : represents a front view of the jaw for straight lines shown in fig. 1 and 2, including a female connector (hub).

Fig. 6 : represents a front view of the jaw for straight lines, shown in fig. 1 and 2 including a male connector (hub).

Fig. 7 and 8 : represent two front views of two jaws for bent lines, object of the invention; with an angle less than 10° or equal to 10° (fig. 7) and with an angle less than 15° or equal to 15° (fig. 8).

Fig. 9, 10 and 11 : represent a connector (hub) of a jaw for bent lines, object of the invention, in side view, front view and plan view, respectively.

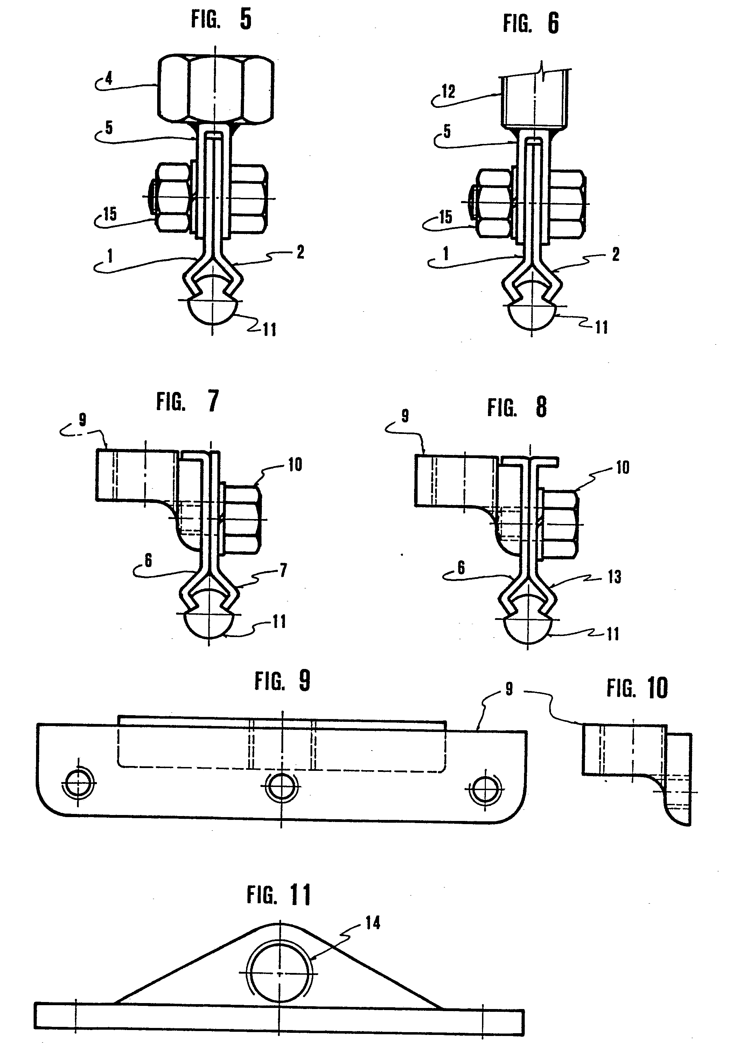

As these figures show, the jaw object of the invention is formed by two plates 1 and 2 fastened each other, directly or indirectly, by means of bolts 15 or studs 10 passing through the holes 3. The plates 1 and 2, 6 and 7, 6 and 13 are pliers-shaped at their lower ends in order to clamp the wire 11, while, in the case of a jaw for straight lines (see fig. 5 and 6), they are parallel at the top ends and equipped with a fork 5, having the form of an element (90° turned in the clockwise direction) to which a nut 4 or a threaded pin 12 is welded for the connection to the suspension not represented in the figure.

In the case of jaws for bent lines (see fig. 7 and 8), the top ends of one or both plates are L bent in order to stiffen themselves; a hub 9 is connected to the mentioned jaws by means of the studs 10 and the hub itself is equipped with a threaded hole 14 for the connection to the suspension not represented in the figure.

As already observed, the jaws according to this invention are made in preference of stainless steel, for example, AISI 316; we can specify in addition that the best results are obtained using plates manufactured from press forged stainless steel sheet.

- - - -

-

**C l a i m s :**

1. Jaw for the support of aerial contact lines of trolley-
-buses, tramways, underground railways, comprising two
plates lengthwise arranged side by side and fastened each
other, whose lower ends are pliers-shaped for the anchorage
of the conductor and whose top end is equipped in central
position with a connection for the suspension.

2. Jaw according to claim 1 wherein the top end of the mentioned plates hears a fork in central position, which is
equipped with the connection means for the suspension.

3. Jaw according to claims 1 and 2 equipped with a hub
(connector) for the suspension, which is central in regard
to the length and to the axis of the jaw itself.

4. Jaw according to claims 1 and 2 equipped with a hub
(connector) for the suspension, which is central in regard
to the length of jaw, but off-center in regard to the jaw
itself.

5. Jaw according to one of the previous claims wherein the
plates forming the jaw show one, two or no bead.

6. Jaw according to claim 5 for $\leq 10°$ bent lines, or $\leq 15°$ bent
lines or straight lines respectively.

7. Jaw according to one of the previous claims, which is
extensible by application of plaques (links) to the plates.

8. Jaw according to one of the previous claims, which is
made of stainless steel.

9. Jaw as described and explained by the figures.

FIG. 1

FIG. 2

FIG. 3

FIG. 4

FIG. 5

FIG. 6

FIG. 7

FIG. 8

FIG. 9

FIG. 10

FIG. 11

European Patent
Office

**EUROPEAN SEARCH REPORT**

| Category | Citation of document with indication, where appropriate, of relevant passages | Relevant to claim | CLASSIFICATION OF THE APPLICATION (Int Cl.³) |
|---|---|---|---|
| | **DOCUMENTS CONSIDERED TO BE RELEVANT** | | |
| X | <u>US - A - 1 448 195</u> (CHANDLER) <br> * Page 1, lines 39-64; figures 1,2 * | 1-3,5, 8,9 | B 60 M 1/24 |
| | <u>CH - A - 259 024</u> (ECKERT) <br> * Page 1, lines 36-66; page 2, lines 39-61; page 3, lines 42-44; figures 1,2,4 * | 1-6,8, 9 | |
| | <u>DE - A - 2 729 578</u> (LICENTIA) <br> * Page 5, last line; page 6, paragraph 1; figures 2,3 * | 1,3,5, 9 | **TECHNICAL FIELDS SEARCHED (Int. Cl.³)** <br><br> B 60 M 1/24 <br> 1/23 <br> 1/10 <br> 1/234 |
| | <u>CH - A - 140 900</u> (FURRER) <br> * Page 1, left-hand column, paragraph 3 - page 2, left-hand column, paragraph 2; figure 3 * | 1,4-6, 9 | |
| | <u>US - A - 2 265 760</u> (LICHTFIELD) <br> * Page 1, right-hand column, lines 30-52 * | 1,8,9 | |

CATEGORY OF
CITED DOCUMENTS

X: particularly relevant
A: technological background
O: non-written disclosure
P: intermediate document
T: theory or principle underlying
   the invention
E: conflicting application
D: document cited in the
   application
L: citation for other reasons

&: member of the same patent
   family.
   corresponding document

The present search report has been drawn up for all claims

| Place of search | Date of completion of the search | Examiner |
|---|---|---|
| The Hague | 05-11-1981 | TIELEMANS |

EPO Form 1503.1   06.78